## Europäisches Patentamt

## European Patent Office

## Office européen des brevets

(11) Veröffentlichungsnummer: **0 083 687**
**B1**

# (12) EUROPÄISCHE PATENTSCHRIFT

(45) Veröffentlichungstag der Patentschrift:
**15.01.86**

(51) Int. Cl.⁴: **B 65 D 47/34**

(21) Anmeldenummer: **82108536.2**

(22) Anmeldetag: **16.09.82**

(54) **Spender für fliessfähige Medien.**

(30) Priorität: **31.12.81 DE 8138264 U**

(43) Veröffentlichungstag der Anmeldung:
**20.07.83 Patentblatt 83/29**

(45) Bekanntmachung des Hinweises auf die Patenterteilung:
**15.01.86 Patentblatt 86/3**

(84) Benannte Vertragsstaaten:
**AT BE CH DE FR GB IT LI LU NL SE**

(56) Entgegenhaltungen:
**FR-A-234 469**
**US-A-2 979 236**
**US-A-3 752 366**

(73) Patentinhaber: **Bramlage GmbH,
Küstermeyerstrasse 31, D-2842 Lohne/Oldenburg
(DE)**

(72) Erfinder: **Mettenbrink, Herbert, Auf der Höhe 3,
D-2842 Lohne Oldenburg (DE)**

(74) Vertreter: **Rieder, Hans- Joachim, Dr.,
Corneliusstrasse 45 Postfach 11 04 51, D-5600
Wuppertal 11 (DE)**

## Beschreibung

Die Erfindung bezieht sich auf einen Spender für fließfähige Medien, mit am Spendergehäuse angeordnetem, sich elastisch zurückstellendem Quetschkopf, der eine Ventil-Mundstück-Öffnung besitzt, mit vom Quetschkopfboden bis zum Spendergehäuseboden reichendem Ansaugschlauch, der von einem Stutzen ausgeht, welcher unter Zwischenschaltung eines Rücksperrventils durch eine Öffnung im Quetschkopfboden mit dem Quetschkopfinnenraum in Verbindung steht, wobei der Quetschkopfboden Teil eines topfförmigen Spendergehäuse-Aufsatzes ist, dessen Mantelwand stufenförmig abgesetzt ist und mit ihrem oberen, querschnittskleineren Mantelwandabschnitt in den Quetschkopf reicht, und mit Mitteln zum Luftdruckausgleich zwischen Aufsatz und Spendergehäuse.

Ein Spender dieser Art ist durch die US-A 3 752 366 bekannt. Die Mittel zum Luftdruckausgleich bestehen dort aus einem Längskanal einer in den Hals des Behälters ragenden Ringwand. Um eine anschließende Queröffnung zwischen dem Mündungsrand des Behälterhalses und dem sich davor erstreckenden Querwandabschnitt des Aufsatzes zu belassen, sind diesem radiale Stege angeformt, die sich auch noch in Gegenrichtung an der Innenseite der Mantelwand des Aufsatzes fortsetzen. Der so geschaffene Ringraum schließt an an die Gewindenut, welche den weiteren Luftausgleichsweg darstellt. Dieser Weg ist permanent offen. Leicht verfliegende Medien können daher nicht verlustfrei gehalten werden. Medien geringerer Fließfähigkeit können andererseits den Luftdruckausgleichsweg versperren, so daß die Funktionsfähigkeit des Spenders in Frage steht. Der untere Rand des auf den querschnittskleineren Mantelwandabschnitt aufgesetzten Quetschkopfes endet vor dem durch angeformte, axial verlaufende Greifrippen verbreiterten Abschnitt der Mantelwand.

Aufgabe der Erfindung ist es, einen gattungsgemäßen Spender in herstellungstechnisch einfacher, gebrauchsvorteilhafter Weise so auszubilden, daß ein günstiger Luftdruckausgleichsweg erreicht ist, dieser aber bei Bedarf sicher verschlossen werden kann.

Gelöst ist diese Aufgabe durch die im Anspruch 1 angegebene Erfindung.

Die Unteransprüche sind vorteilhafte Weiterbildungen des erfindungsgemäßen Spenders.

Zufolge solcher Ausgestaltung ist mit einfachen Mitteln ein sicher verschließbarer Luftdruckausgleichsweg realisiert. Das Gewinde braucht nicht mehr einbezogen zu werden. Vielmehr erlaubt der oberhalb des Spendergehäusehalses liegende Versatz einen direkten Stichkanal, der durch die Überkappe dichtend überfangen wird. Die davor liegende, einfach durch Wandungsversatz realisierbare Stufe läßt sich auch vorteilhaft zum verschließenden Aufsetzen der Überkappe nutzen. Weiter erweist es sich in Bezug auf das Versperren des Gewindeweges als vorteilhaft, daß die gegenüberliegende Innenflanke der Stufe auf dem Mündungsrand des Spendergehäuses dichtend aufliegt. Letztere läßt sich bspw. in Form einer Ringlippe beim Spritzvorgang gleich mitberücksichtigen. Um bspw. toleranzbedingte Abweichungen in Bezug auf den aufsetzenden Rand einfachst zu kompensieren, ist es weiter von Vorteil, daß der Rand lippenartig zugespitzt ist. Eine solche Lippenform bringt eine hohe Anpassungsfähigkeit in Bezug auf die Gegendichtfläche.

Der Gegenstand der Erfindung ist nachstehend anhand eines zeichnerisch veranschaulichten Ausführungsbeispieles näher erläutert.

Der aus Gummi oder geeignetem Kunststoff bestehende Quetschkopf 6 weist unterhalb seiner Decke 6' seitlich eine Ventil-Mundstück-Öffnung 8 auf. Deren fest gegeneinandertretenden, die Mundstück-Öffnung verschließenden Lippen sind mit 9 bezeichnet.

Der Quetschkopf weist eine balgartige Struktur auf. Er besitzt eine auf der der Ventil-Mundstück-Öffnung 8 gegenüberliegenden Seite eine zwickelartige Querfalte 10. Diese erstreckt sich auf mittlerer Höhe des im wesentlichen domartig gestalteten Quetschkopfes 6. Die eine, von oben einlaufende, also von der Decke 6' her kommende Faltenwand 10' bildet oben eine randnahe Rundung 6'' aus. Die andere Faltenwand 10'' läuft von der Zwickelfuge aus in einem größeren Bogen 6''' nach unten in den unteren Quetschkopfrandabschnitt 21 ein.

Der Quetschkopfinnenraum 12 ist über einen Ansaugschlauch 13 mit dem Innenraum 14 des Spendergehäuses 1 verbunden. Der unten offene Schlauch reicht bis zum Boden 2 des Spendergehäuses 1 und verläuft, zentral vom Hals 5 ausgehend, in einem Bogen bis in eine vom Standrand 3 geformte Ringrinne 15. Die dortige Schlauchöffnung 13' taucht so bis in den letzten Rest des Mediums 7 ein.

Der Ansaugschlauch 13 geht vom Quetschkopfboden 16' aus. Letzterer ist als Oberseite eines topfförmigen Spendergehäuse-Schraubaufsatzes 16 gebildet. Der Schraubaufsatz 16 besitzt ein mit dem Außengewinde 4 des Halses 5 zusammenwirkendes Innengewinde 17.

Der Quetschkopfboden 16' ist zentral durchbrochen. Ihm ist ein nach oben wie unten überstehender Stutzen 18 angeformt. Während der in Richtung des Spendergehäuse-Innenraumes 14 weisende zylindrische Abschnitt des Stutzens 18 den aufgesteckten Ansaugschlauch 13 trägt, ist der die Oberseite des Quetschkopfbodens überragende, also in den Quetschkopfinnenraum hineinragende Abschnitt mit einem Rücksperrventil V versehen. Es handelt sich um ein Flatterventil, welches über ein eine Materialbrücke bildendes Filmscharnier am Stirnrand des Stutzens wurzelt.

Das im Vertikalschnitt dargestellte Spendergehäuse 1 ist in Form einer Flasche gestaltet, die sich etwa ab halber Höhe nach unten hin kegelstumpfartig verbreitert und im peripheren Bereich des etwas eingezogenen Bodens 2 einen Standrand 3 formt.

Der obere, im wesentlichen zylindrisch gehaltene Abschnitt des Spendergehäuses 1 setzt in einen mit Außengewinde 4 versehenen Hals 5 fort. Letzterer trägt einen aus sich elastisch zurückstellendem Material gebildeten Quetschkopf 6. Dieser ist Teil einer das Medium 7 portionsweise ausbringenden Spendermechanik.

Die Ventilsitzfläche wird ebenfalls vom Stirnrand 18' des Stutzens gebildet. Der Schraubaufsatz 16 besteht aus im Grunde unverformbaren Material, welches aber bezüglich der Flatterventilausbildung vor allem durch die erwähnte Filmscharnierausbildung die dafür erforderliche Beweglichkeit aufweist.

Der Quetschkopf 6 wird dem Spendergehäuse-Schraubaufsatz 16 im Wege einer Steckverbindung zugeordnet. Dabei ist der erforderliche Zusammenhalt dadurch verwirklicht, daß die Topfmantelwand 19 des Schraubaufsatzes 16 im Bereich ihres bodenseitigen Abschnittes eine Zahnprofilierung 20 trägt, dies zum formschlüssigen Übergriff des die entsprechende Gegenprofilierung aufweisenden Quetschkopfrandabschnittes 21. Statt einer nur auf kurzem Abschnitt vorgesehenen Zahnprofilierung kann diese auch als durchgehend umlaufende Ringrippenprofilierung realisiert sein. Dabei ist es aus Gründen auch einer ausreichenden Dichtschließung zwischen dem hochflexiblen Spenderkopf 6 und dem selbst weitestgehend unverformbaren Schraubaufsatz 16 günstig, wenn mehrere Ringrippenprofilierungen vorgesehen sind, so daß, wie dargestellt, eine mäanderförmige Dichtungsfuge erreicht ist.

Wie ersichtlich, befindet sich die Zahnprofilierung 20 im Bereich einer rückversetzten Stufe 22. Deren gegenüberliegende Innenflanke setzt als Ringlippe 23 dichtend auf dem Mündungsrand 24 des Spendergehäuses 1 bzw. dessen Halses 5 auf. Der abgesetzte Topfwandabschnitt erstreckt sich vertikal im wesentlichen ebenengleich zum Hals 5. Der demgegenüber durchmessergrößere Abschnitt des Spendergehäuse-Schraubaufsatzes 16 schließt mit einer im Außendurchmesser gleich gehaltenen, aufsetzbaren Überkappe 25 ab. Letzterer weist Innengewinde auf, welches mit dem entsprechenden Außengewinde des stufennahen Quetschkopfrandabschnittes zusammenwirkt. Die untere Randkante des Quetschkopfrandabschnittes wird vom lippenartig zugespitzten Rand 25' der Überkappe 25 noch überragt. Dieser lippenartig zugespitzte Rand setzt auf der sich davor erstreckenden Stufe 22 des Spendergehäuse-Schraubaufsatzes 16 dichtend auf.

Im Bereich der Stufe 22 befindet sich eine Luftausgleichsöffnung 26. Letztere ist bei aufgeschraubtem Deckel 25 verschlossen, so daß bei Umkippen der Flasche das Medium 7 an einem Auslaufen gehindert ist.

Die Funktionsweise ist wie folgt: Zum portionierten Ausbringen wird der Quetschkopf 6 etwa senkrecht zur Querfalte 10 zusammengedrückt und die darin befindliche Luft über die Ventil-Mundstück-Öffnung 8 verdrängt. Das Rücksperrventil V bleibt dabei geschlossen. Nach Loslassen des Quetschkopfes 6 entsteht im Quetschkopfinnenraum 12 Unterdruck. Hierdurch öffnet sich das Rückschlagventil V. Die Ventil-Mundstück-Öffnung 8 bleibt nun geschlossen. Der erzeugte Unterdruck zieht über den Ansaugschlauch 13 Medium 7 in den Quetschkopfinnenraum 12. Ist dieser mit Medium angefüllt, so wird durch die erneute Quetschkopfbetätigung das Medium portionsweise durch die Ventil-Mundstück-Öffnung 8 hindurch ausgegeben.

Bei anfänglicher Ingebrauchnahme ist wohl ein mehrmaliges pumpenartiges Betätigen des Quetschkopfes 6 erforderlich. In der normalen Gebrauchsphase liegt jedoch stets ein ausgabebereiter Anteil des Gesamtvorrats im Quetschkopfinnenraum 12 vor.

Der Ausgabe des Mediums 7 ist praktisch verlustfrei, da die Schlauchöffnung 13' in der gegenüber dem eingezogenen Boden tieferliegenden Ringrinne 15 liegt.

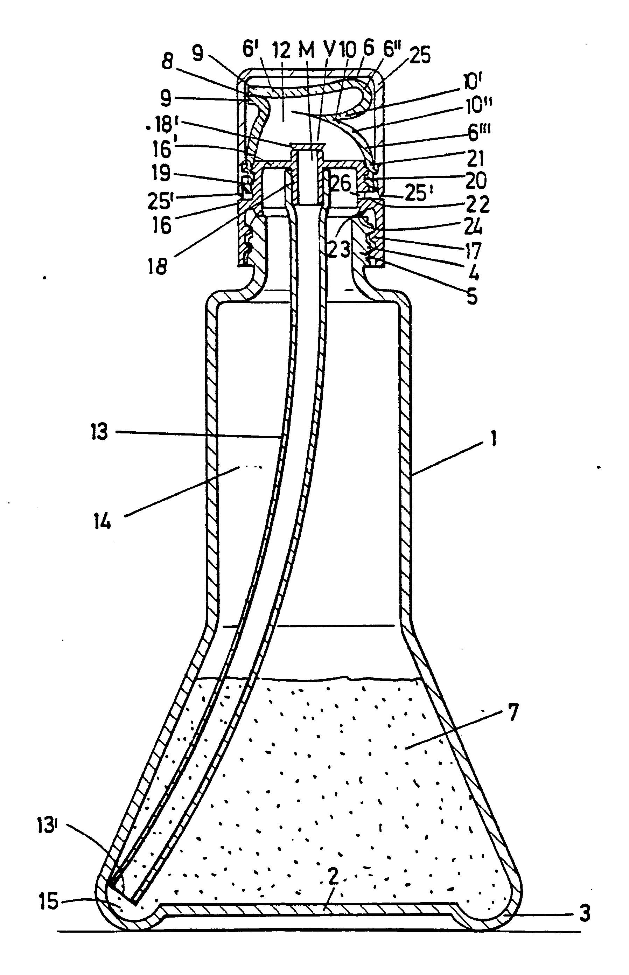

## Patentansprüche

1. Spender für fließfähige Medien, mit am Spendergehäuse (1) angeordnetem, sich elastisch zurückstellendem Quetschkopf (6), der eine Ventil-Mundstück-Öffnung (8) besitzt, mit vom Quetschkopfboden (16') bis zum Spendergehäuseboden (2) reichendem Ansaugschlauch (13), der von einem Stutzen (18) ausgeht, welcher unter Zwischenschaltung eines Rücksperrventils (V) durch eine Öffnung im Quetschkopfboden mit dem Quetschkopfinnenraum (12) in Verbindung steht, wobei der Quetschkopfboden Teil eines topfförmigen Spendergehäuse-Aufsatzes (16) ist, dessen Mantelwand (19) stufenförmig abgesetzt ist, und mit ihrem oberen, querschnittskleineren Mantelwandabschnitt in den Quetschkopf (6) reicht, und mit Mitteln zum Luftdruckausgleich zwischen Aufsatz und Spendergehäuse (1), dadurch gekennzeichnet, daß der stufenförmige Absatz oberhalb des Spendergehäuse-Halses (5) liegt und im Bereich seiner Stufe (22) eine Luftausgleichsöffnung (26) mündet, die mittels einer aufsetzbaren Überkappe (25) verschließbar ist.

2. Spender nach Anspruch 1, dadurch gekennzeichnet, daß die gegenüberliegende Innenflanke der Stufe (22) auf dem Mündungsrand (24) des Spendergehäuses (1) dichtend aufliegt (Ringlippe 23).

3. Spender nach Anspruch 1, dadurch gekennzeichnet, daß der untere Rand (25') der Überkappe (25) auf die Stufe (22) dichtend aufsetzt.

4. Spender nach Anspruch 3, dadurch gekennzeichnet, daß der Rand (25') lippenartig zugespitzt ist.


**Claims**

1. A dispenser for free-flowing media, having an elastically self-restoring squeeze-head (6) which is arranged on the dispenser casing (1) and which has a valve mouthpiece opening (8), having a suction tube which reaches from the bottom (16') of the squeeze-head down to the bottom (2) of the dispenser casing and which extends from a stub (18) which with the interposition of a non-return valve (V) is connected through an opening in the bottom of the squeeze-head to the interior (12) of the squeeze-head, the bottom of the squeeze-head being part of a pot-shaped extension (16) to the dispenser casing, the outer wall (19) of which is reduced in the form of a step and reaches by its upper section of outer wall of smaller cross-section into the squeezehead (6), and having means of equalization of air pressure between the extension and the dispenser casing (1), characterized in that the stepshaped reduction lies above the neck (5) of the dispenser casing and in the region of its step (22) an air equalizer opening (26) emerges, which may be closed by means of an outer cap (25) which may be superimposed.

2. A dispenser as in Claim 1, characterized in that the inner face lying opposite the step (22) rests against the edge (24) of the mouth of the dispenser casing (1) to form a seal (annular lip 23).

3. A dispenser as in Claim 1, characterized in that the bottom edge (25') of the outer cap (25) seats against the step (22) to form a seal.

4. A dispenser as in Claim 3, characterized in that the edge (25') tapers like a lip.


**Revendications**

1.- Distributeur de moyens fluides comportant: une tête de pressage (6) à rappel élastique prévue sur le corps (1) de distributeur et qui possède une ouverture d'embouchure de valve (8), un tube flexible (13) s'étendant du fond (16') de la tête de pressage au fond (2) du corps de distributeur et sortant d'un support (18) relié à l'espace intérieur (12) de la tête de pressage, via un clapet anti-retour (V) et une ouverture ménagée à travers le fond de la tête de pressage qui est une partie d'un prolongement (16) en forme de bouchon du corps de distributeur dont la paroi d'enveloppe (19) est décalée en forme d'épaulement à gradin et pénètre dans la tête de pressage (6) par sa partie de paroi d'enveloppe supérieure de plus petite section, et des moyens de respiration d'air entre le prolongement et le corps de distributeur (1), caractérisé en ce que le gradin en forme d'épaulement se trouve au-dessus du col (5) du corps de distributeur et qu'une ouverture de respiration d'air (26) débouche dans la zone de son épaulement (22) et est susceptible d'être obturée par un capuchon amovible (25).

2.- Distributeur selon la revendication 1, caractérisé en ce que le flan intérieur opposé de l'épaulement (22) est en appui de façon étanche sur le rebord d'embouchure (24) du corps de distributeur (1) (lèvre annulaire 23).

3.- Distributeur selon la revendication 1, caractérisé en ce que le bord inférieur (25') du capuchon (25) est en appui de façon étanche sur l'épaulement (22).

4.- Distributeur selon la revendication 3, caractérisé en le bord (25') est effilé en forme de lèvre.